# EUROPEAN PATENT SPECIFICATION

(11) **EP 1 516 702 B1**
(45) Date of publication and mention of the grant of the patent: **16.06.2010**
(21) Application number: 04021919.8
(22) Date of filing: 15.09.2004
(51) Int. Cl.: B25F 5/02, H02J 7/00, H01M 2/10

(54) **Removable battery pack for a portable electric power tool**
Abnehmbarer Akkupack für ein tragbares elektrisches Kraftwerkzeug
Ensemble-batterie amovible pour outil électrique portatif

(30) Priority: 15.09.2003 US 662937
(43) Date of publication of application: 23.03.2005
(73) Proprietor: Techtronic Industries Co., Ltd., New Territories, Hong Kong (CN)
(72) Inventor: Brazell, Kenneth, Piedmont, SC 29673 (US); Wong Kam Kee, Thomas, Kowloon, Hong Kong (TW)
(74) Representative: HOFFMANN EITLE

(56) References cited:
- EP-A1- 0 804 985
- US-A- 4 469 765
- US-A- 5 401 591
- US-A1- 2002 158 103
- US-B1- 6 279 741
- US-B1- 6 598 993

## Description

### 1. Field of the Invention

The invention relates to removable battery packs for portable electric power tools, according to the preamble of claim 1, as is known from US 5 401 591 A.

### 2. Background Art

In the advent of battery operated cordless power tools, tradesmen, artisans, and even typical homeowners have appreciated the advantages provided by a power tool that does not require a power cord for operation. Accordingly, improvements to cordless power tools have developed in the prior art, many of which relate specifically to removable battery packs. One such improvement includes a foam or rubber element included within a battery pack housing to isolate the battery cells from the housing. The foam or rubber element dampens any vibration or impact loads, experienced by the battery cells, that are applied to the battery housing. The prior art also illustrates various attachment configurations for minimizing the effort required to secure the battery to the power tool. Yet another feature recently introduced in the prior art are ventilation ports provided in the battery for cooling the battery cells housed therein during charging.

A goal of the present invention is to provide a further dampening element for protecting the battery pack and portable electric power tool if the tool is dropped or an impact is applied to the battery pack.

Another goal is to enable the battery pack to be installed on the power tool with the operator using one hand.

### SUMMARY OF THE INVENTION

An aspect of the invention is to provide a portable electric power tool having a plastic housing enclosing a plurality of battery cells mounted therein. The plastic housing includes a floor and a circumferential wall extending from an outer peripheral edge of the floor. A cap cooperates with the housing providing an enclosed internal cavity wherein the battery cells are mounted. A relatively soft elastic bumper is mounted externally to the plastic housing to cushion an impact load exerted on the battery pack, if the battery pack or the battery pack and associated power tool were to be dropped or experience an impact load to the battery pack.

Another aspect of the invention is that the battery pack is provided with a tapered guide-way which cooperates with the corresponding structure and the power tool to enable the battery pack to be slid onto and off of the power tool. A spring biased latch is further provided which latches the battery pack securely in place when properly installed. The latch force is less then the static frictional force exerted by the battery pack when placed upon a smooth dry planar horizontal glass reference surface thereby enabling the user to install the battery pack while supported on the horizontal surface by sliding the power tool onto the battery pack using one hand.

The above aspects and other aspects, objects, features, and advantages of the present invention are readily apparent from the following detailed description of the best mode for carrying out the invention when taken in connection with the accompanying drawings.

### BRIEF DESCRIPTION OF THE DRAWINGS

FIGURE 1 is a side elevational view of a preferred embodiment battery pack assembled to a portable electric power tool in accordance with the present invention;
FIGURE 2 is a side elevational view of the battery pack of Figure 1, illustrated assembled to another portable electric power tool, also in accordance with the present invention;
FIGURE 3 is an enlarged fragmentary view of a power tool incorporating the battery pack of the present invention;
FIGURE 4 is an enlarged bottom plan view of the battery pack of Figure 3;
FIGURE 5 is a partial section view of the battery pack of Figure 3 taken along section line 5-5 in Figure 3;
FIGURE 6 is a top plan view of the battery pack of Figure 3, illustrated without the portable electric power tool;
FIGURE 7 is a section view of the battery pack taken along section line 7-7 in Figure 6;
FIGURE 8 is a schematic representation of the battery pack and portable electric power tool of Figure 1;
FIGURE 9 is an enlarged partial section view of the battery pack of Figure 3;
FIGURE 10 is a partial section view of an alternative embodiment battery pack, in accordance with the present invention;
FIGURE 11 is a partial section view of an alternative embodiment battery pack, in accordance with the present invention;
FIGURE 12 is a partial section view of another alternative embodiment battery pack, in accordance with the present invention;
FIGURE 13 is a partial section view of still another battery pack in accordance with the present invention;
FIGURE 14 is a partial section view of an even further alternative embodiment battery pack in accordance with the present invention;

### DETAILED DESCRIPTION OF THE PREFERRED EMBODIMENT(S)

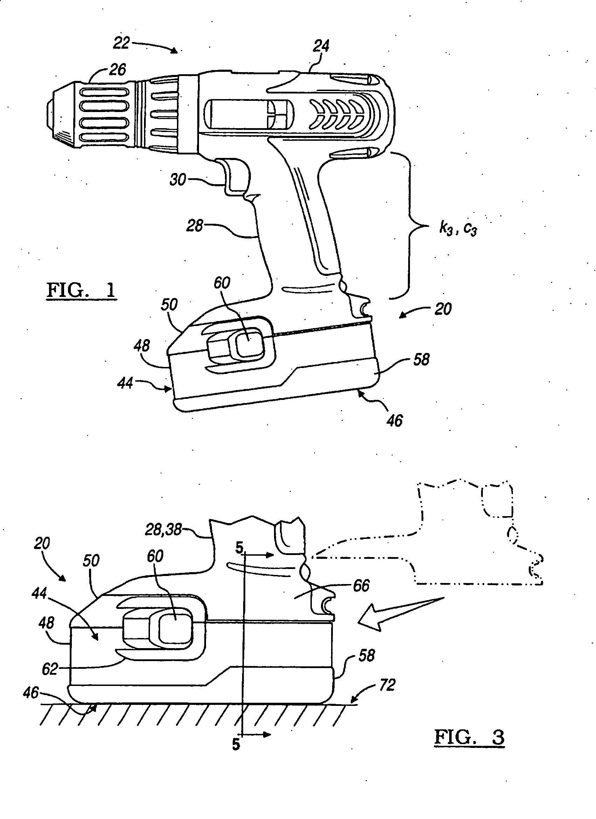

With reference to Figure 1, a preferred embodiment battery pack 20 is illustrated in accordance with the present invention, and utilized with a portable electric power tool, specifically referred to as a cordless drill 22. The cordless drill 22 has a longitudinal upper housing 24 with a motor and transmission (not shown) disposed therein for driving an output spindle (not shown) and a chuck 26 affixed thereto. The drill 22 includes a pistol grip handle 28, which is formed as part of the housing and extends from the longitudinal housing 24. A trigger switch 30 is displaced from the handle 28 for actuation by a user. The trigger switch 30 is utilized for providing electrical power from the battery pack 20 to the motor disposed within the longitudinal housing 24 for performing a rotary operation or the like to the chuck 26. The drill 22 is similar to the cordless drill disclosed in assignee's United States patent application, *Three Speed Rotary Power Tool*, Serial No. 10/449,226, which was filed on May 30, 2003.

In conventional use of cordless power tools such as the drill 22 of Figure 1, it is common that the battery pack 20 may be removed at various times at a job site. The battery pack 20 may be removed to be recharged and subsequently an extra battery pack 20 will be affixed to the drill 22. It is also common that cordless power tools may be provided, each adapted to receive a common battery pack. Thus, as the user changes from one power tool to another, the battery pack 20 may be removed from one and secured to the other.

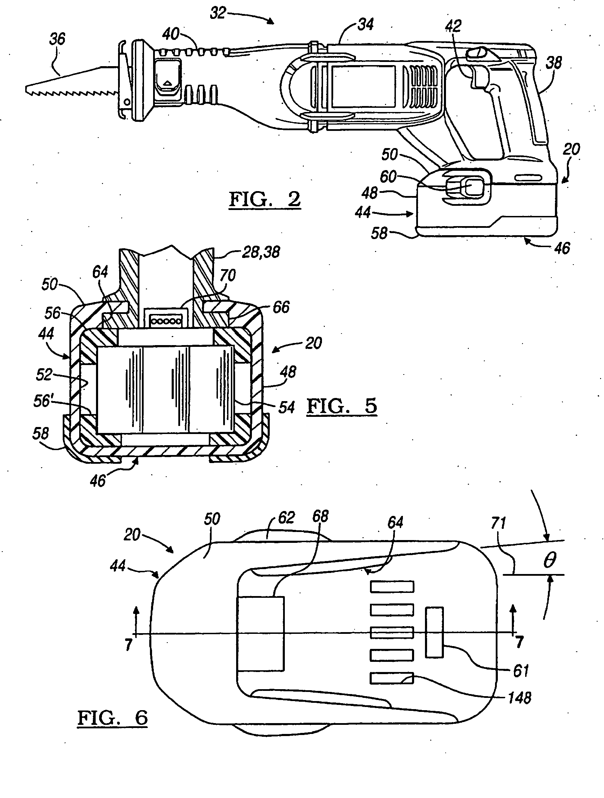

Accordingly, with reference to Figure 2, another portable electric power tool is illustrated with the battery pack 20 secured thereto. The portable electric power tool of Figure 2 is characterized as a cordless reciprocating saw 32. The cordless reciprocating saw 32 includes a longitudinal housing 34 with a motor and transmission (not shown) disposed therein for reciprocatingly driving a saw bar (not shown) also oriented therein for driving a tool bit such as a cutting blade 36 that is removably affixed to the saw bar. Reciprocating saw 32 includes a rearward handle 38 and a forward nose portion 40, each of which are sized to be gripped by a hand of the user. The rearward handle 38 also includes a trigger switch 42 for selectively providing current from the battery pack 20 to the motor. The reciprocating saw 32 is similar to the reciprocating saw disclosed in assignee's United States patent application, *Toolless Blade Holder for a Reciprocating Tool,* S.N. 10/303,425, and filed on November 25, 2002, which is incorporated in its entirety by reference herein.

Although the exemplary cordless drill 22 and cordless reciprocating saw 32 are illustrated and described, the present invention contemplates utilization of the battery pack 20 with any cordless power tool, including, but not limited to, a cordless circular saw, a cordless sander, a cordless caulking gun, a cordless impact drill, a cordless jigsaw, a cordless miter saw, a cordless planer, a cordless joiner, a cordless router, a cordless scroll saw, and the like.

As the battery pack 20 is interchanged from various power tools or from a tool to a charger; or as the battery pack 20 and the associated power tool are transported to and used in various applications, the battery pack 20 or the battery pack 20 and the associated power tool may be inadvertently dropped on to a relatively hard surface. Dropping of the battery pack 20 or the battery pack 20 and the associated power tool may cause damage to the battery pack 20 and/or the associated power tool. In order to survive certain impact loads, the prior art has provided cordless power tools with a housing design and housing material that is both strong and partially resilient to avoid failures from such impacts. The prior art has also provided battery packs with a housing formed of such material and having a structural design to overcome certain impact loading. Accordingly, the battery pack 20 of the present invention includes a housing 44, formed of a high strength plastic to resist certain impact loads.

Referring now to Figures 3-5, the battery pack 20 is illustrated enlarged for further detail. Specifically, the plastic housing 44 of the battery pack 20 has a generally planar floor 46 that is sized to support the battery pack 20 in an upright position when resting on an underlying support surface. The floor 46 may also be sized to stand upright when affixed to certain power tools, such as the cordless drill 22. The plastic housing 44 includes a circumferential wall 48 extending upward from an outer peripheral edge of the floor 46. The battery pack 20 further includes a cap 50, which cooperates with an upper and outer peripheral region of the circumferential wall 48. The cap 50, circumferential wall 48 and floor 46 of the plastic housing 44 collectively define an enclosed internal cavity 52, which is illustrated in the sectional view of Figure 5.

Referring specifically to Figure 5, the battery pack 20 includes a plurality of battery cells 54 mounted within the enclosed internal cavity 52. The prior art has protected battery cells from direct impact loading that may be applied to the battery pack housing by including internal, annular, elastic members within the battery pack housing. Accordingly, the battery pack 20 of the present invention includes a pair of internal, annular, elastic members 56, 56' that are secured within the internal cavity 52 and cooperate with the battery cells 54 thereby suspending the battery cells 54 within the internal cavity 52. Thus, if an impact load is applied to the battery pack housing 44, the internal annular elastic members 56, 56' dampen the associated impact applied to the plastic housing 44. Further, the internal annular elastic members 56, 56' help prevent the battery cells 54 from contacting and/or impacting the floor 46, circumferential wall 48 or the cap 50 of the housing 44.

The annular elastic members 56, 56' have a durometer between 20 Shore O and 80 Shore A, which may be determined more specifically for the associated application. Ideally, a durometer is selected that provides both elastic and dampening characteristics. Additionally, the elastic members 56, 56' are sized to suspend the battery cells 54 and therefore, have a nominal radial thickness of 0.3 mm to a nominal radial thickness that is 4 times the nominal wall thickness of the plastic housing 44.

The battery pack 20 further includes a relatively soft elastic bumper 58 mounted externally to the plastic housing 44. The elastic bumper 58 of the preferred embodiment is oriented along the plastic housing floor 46 to protect the battery pack 20 and if necessary, the associated power tool by cushioning the impact load exerted on the battery pack 20 when dropped in an orientation in which the battery pack 20 strikes a hard surface. Prior art battery packs typically experience fracture or failure at the outer peripheral edge of the floor 46 due to the impact load being applied to the edge, rather then being distributed over a surface or transmitting high shock loads to the tool housing resulting in a fracture at a remote location. Accordingly, the elastic bumper 58 extends about the outer peripheral edge of the floor 46 and overlays portions of the floor 46 and the circumferential wall 48. The bumper 58 covers and protects the area of the battery pack plastic housing 44 that is most likely to experience an impact load and failure and thus minimizes damage to the battery pack 20. Any durometer of bumper 58 is contemplated, for example, the durometer may be between 20 Shore O and 80 Shore A. However, it is desired to provide the bumper 58 with characteristics that absorb and dampen some of the impact load and therefore a durometer of 20 Shore A to 75 Shore A is preferred. The durometer will be dictated by the bumper thickness, the tool weight and the bumper contact area at the shock point.

Referring again specifically to Figure 3, the battery pack 20 is provided with a pair of spring biased latch buttons 60 for locking the battery pack 20 to the associated power tool in assembled state via latch pawl 61. The prior art battery packs have been provided with a portion of the plastic housing raised about each latch button to prevent inadvertent unlatching of the battery pack and to minimize impact loads applied to the associated latch for protection thereof. Accordingly, the battery pack 20 includes an elastic bumper 62 formed about each latch button 60, having a lateral thickness that projects outward from the circumferential wall 48 to protect the latch button 60 and to cushion any impact loads applied thereto. The latch elastic bumper 62 may be formed as a separate bumper as illustrated in Figure 3. The lateral thickness of the latch elastic bumper 62 is sized so that it extends outward from the circumferential wall 48, past the latch button 60 in the outwardmost position of the latch button 60 wherein the spring (not shown) that biases the latch button 60 is extended. However, the invention contemplates that the thickness of the latch elastic bumper 62 at least extends outwardly to a distance corresponding with the latch in its compressed orientation to thereby prevent impact loads to the latch button 60. It is ideal to protect the latch buttons 60 of the battery pack 20 because damage to one of the latches 60 may impair or prevent assembly with the power tool.

The battery pack 20 of the preferred embodiment cooperates with the associated power tool in sliding engagement that is generally parallel with the floor 46, commonly referred to as a slide-on battery pack. This engagement is illustrated in Figure 3 with a lowermost portion of the handle 28 illustrated in solid and assembled with the battery pack 20. The lowermost portion of the handle 28 is also illustrated in phantom in an unassembled orientation relative to the battery pack 20. Prior art battery packs that are referred to as stem battery backs are assembled and disassembled to the power tool by sliding engagement in a direction that is generally perpendicular to the respective floor of the battery pack. Stem battery packs facilitate one handed assembly because the user may compress the latches by pressing the power tool in a direction that is generally perpendicular to an underlying support surface thereby overcoming the spring bias of the latches in assembling the tool.

However, the preferred embodiment is a slide-on battery pack 20 to prevent inadvertent disassembly of the battery pack 20 from the power tool, for minimizing impact loads applied thereto. Such inadvertent disassembly may occur during operation of the power tool, whereby the user may press the battery pack 20 against an object that is proximate the work site or the user may inadvertently depress one or more of the latch buttons while gripping the power tool proximate to or about the battery pack 20. Power tools such as the cordless drill 22 and cordless reciprocating saw 32 are commonly utilized in a generally upright orientation. Therefore, with the slide-on battery pack 20 of the preferred embodiment, dropping of the battery pack 20 is minimized by reducing the probability that gravity will disengage the battery pack 20 from the power tool upon the latch buttons 60 being inadvertently depressed.

Prior art battery packs are known which have a slide-on engagement to the associated power tool. However, the prior art battery packs that assemble and disassemble to the associated power tool in a sliding engagement manner that is parallel to the floor, like the preferred embodiment, typically do not facilitate one handed engagement of the battery pack to the power tool. Using a prior art battery pack as the power tool is pressed in a direction of the arrow in Figure 3, before the bias force of latch pawl 61 is overcome, causes the prior art battery pack to slide along an underlying support surface. Accordingly, the bumper 58 of the preferred embodiment has a high coefficient of friction to maintain the battery pack 20 in an orientation upon an underlying support surface for one handed assembly. The coefficient of friction should be high enough such that the battery pack 20 has a static frictional force that is greater than the latch force, when the battery pack 20 is placed on a relatively smooth surface such as a smooth, dry, planar horizontal glass reference surface. The coefficient of friction may be high enough so that the dynamic frictional force applied to the battery is greater than the associated latch force so that assembly may still occur even if the battery pack 20 is sliding along the underlying support surface. Accordingly, the elastic bumper 56 should be provided of a material having a high static coefficient of friction, specifically a static coefficient of friction greater than 0.5 when cooperating with a smooth, dry planar glass reference surface. Accordingly, the preferred embodiment has a static coefficient of friction preferably greater than 0.8 when cooperating with a smooth, dry planar glass reference surface.

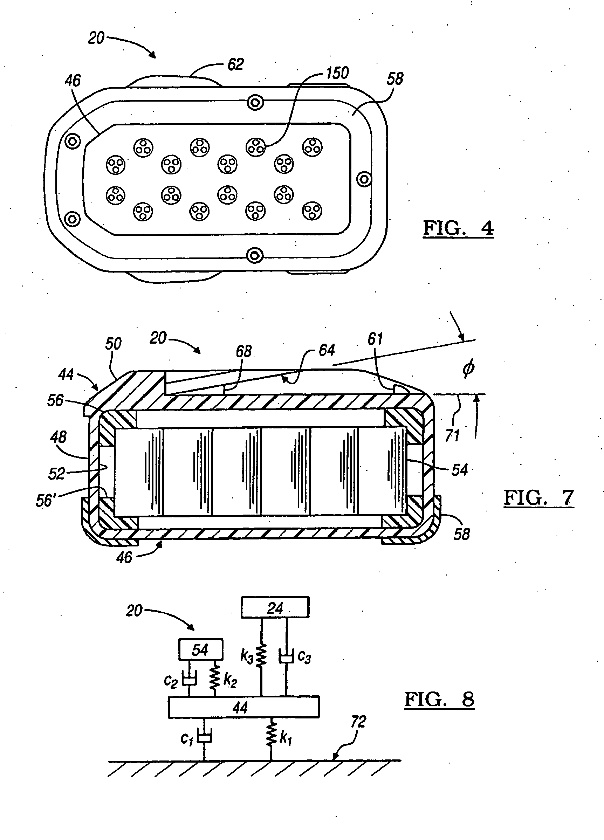

Referring now to Figures 6 and 7, another feature of the battery pack 20 is illustrated. The cap 50 of the battery pack 20 includes a tapered guide-way 64 for releasabily receiving a cooperating mounting flange 66 of the handle 28, 38 of the associated power tool 22, 32. The mounting flange 66 is aligned generally parallel to the floor 46 of the battery pack 20 when in the assembled mode. The battery pack 20 includes a first electrical connector 68 disposed within the tapered guide-way 64. The first electrical connector 68 is electrically connected to the battery cells 54 in a conventional manner. The mounting flange 66 on the power tool includes a corresponding second electrical connector 70 disposed therein as illustrated in Figure 5 for mating engagement with the first electrical connector 68. Upon engagement of the second electrical connector 70 and first electrical connector 68, power is provided from the battery cells 54 to the motor as controlled by the associated trigger switch 30, 42. The tapered guide-way 64 tapers in both a transverse and vertical direction to accommodate a slight misalignment of the power tool 22, 32 and the battery pack 20 during assembly. Thus, the tapered guide-way 64 assists the user in aligning the plug 68 and receptacle 70. Referring to Figure 6, the angle of the taper relative to a central longitudinal axis 71 that is parallel to the floor is illustrated by angle θ. Taper angle θ of the preferred embodiment battery pack 20 is approximately 5°, however, any angle that facilitates assembly regardless of slight misalignment is contemplated by the present invention, such as a range of 1° to 10°. Referring to Figure 7, a vertically tapered angle relative to the central longitudinal axis 71 is indicated by angle φ. Taper angle φ, as contemplated by the present invention, can be any angle for overcoming this alignment, such as 1° to 10°. Taper angle φ of the preferred embodiment is approximately 5°.

As stated before the elastic bumper 58 provides both resilient and dampened support to the plastic housing 44. Accordingly, the elastic bumper 58 is formed of a low durometer rubber material. Referring to Figure 8, a schematic is illustrated representing the vibrational characteristics of the battery pack 20 and the associated power tool 22, 32. Specifically, a hard surface 72 is depicted at the point of contact with the battery pack 20. Since the elastic bumper 58 has both resilient and shock absorbing characteristics, the bumper 58 is represented by spring k₁ and dampener c₁. Upon impact of the battery housing 44 and the hard surface 72, the resilient characteristics of the elastic bumper 58, represented by k₁ and the shock absorbing characteristics of the elastic bumper 58, represented by c₁ reduce the impact load that is provided to the battery housing 44.

Additionally, the internal elastic members 56, 56' provided in the internal cavity 52 of the battery housing 44 provide additional resilient characteristics represented by spring k₂ and shock absorbing characteristics represented by dampener c₂ to the battery cell 54. Unlike the prior art, the battery cell 54 is protected from impact loads collectively by the characteristics of the internal elastic members 56, 56' and the characteristics of the elastic bumper 58.

A portion of the power tool housing that is between the operational elements of the power tool and the battery pack 20 assist in cushioning impact loads that are translated from the battery pack 20 to the operational elements. Although the housing is formed of a relatively rigid material such as high strength plastic, the material still inherently includes resilient and dampening characteristics, although relatively small in comparison to those of the elastic bumper 58 and annular internal elastic members 56, 56'. Specifically referring to the cordless drill 22, such characteristics are provided due to the length of the handle 28 separating the longitudinal housing 24 and the battery pack 20. The resilient characteristics of the handle 28 are represented by spring k₃ and the shock absorbing characteristics of the handle 28 are illustrated by dampener c₃ in Figure 8. Prior art power tools distribute impact loads imparted to the battery pack 20 from the plastic housing 44 to the longitudinal housing 24 with shock absorbing and cushioning being provided by the minimal characteristics of the handle 28. The preferred embodiment provides additional shock absorption initially at the point of contact of elastic bumper 58. Therefore, the elastic bumper 58 provides additional cushion support to the battery cells 54 and the operational elements of the longitudinal housing 24, while concomitantly protecting the plastic housing 44. The housing of the reciprocating saw 32 provides shock absorption and resilient characteristics, although minimal, in comparison to the cordless drill 22 because the battery pack 20 is located generally adjacent to the longitudinal housing 34.

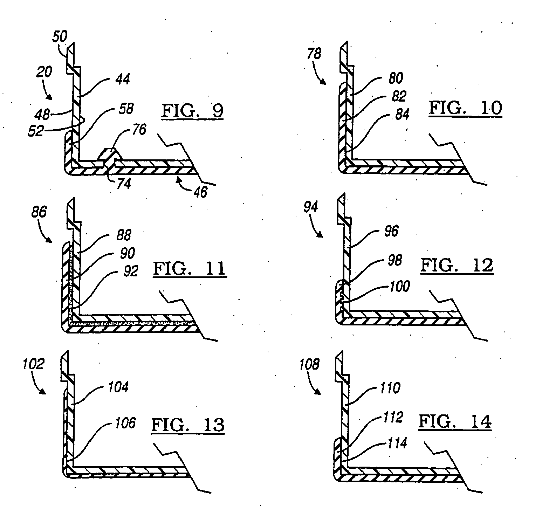

Referring now to Figures 9 through 14, a plurality of battery pack bumper details are illustrated in partial section view, including the preferred embodiment battery pack 20 and alternative embodiment battery packs, to demonstrate various manufacturing methods for affixing an elastic bumper to the corresponding plastic housing.

Referring now to Figure 9, a partial cross section of the battery pack 20 is provided to illustrate the attachment of the elastic bumper 58 to the plastic housing 44. Specifically, plastic housing 44 is formed from an injection molding process providing the plastic housing 44 with a nominal wall thickness ranging from 2.5 mm to 3.5 mm. The elastic bumper 58 is over-molded onto the plastic housing 44 providing a rubbery bumper with a thickness of approximately 1 mm. The plastic housing 44 includes a plurality of apertures 74, one of which is illustrated in Figure 9, formed therethrough. As the elastic bumper 58 is over-molded onto the plastic housing 44, a projection 76 of the elastic bumper 58 is formed through the aperture 74 thereby mechanically interlocking the elastic bumper 58 to the plastic housing 44. Alternatively, the elastic bumper 58 and projection 76 may be formed separately from the plastic housing 44 and may be fastened thereto, such as by pressing the projection 76 through the aperture 74, thereby mechanically interlocking the elastic bumper 58 to the plastic housing 44. Of course, other common fasteners such as screws, retaining clips or the like are contemplated by the present invention.

Referring now to Figure 10, an alternative embodiment battery pack 78 is illustrated in accordance with the present invention. The battery pack 78 includes a plastic housing 80 and an elastic bumper 82 that is bonded thereto such that an interface 84 of the bumper 82 and plastic housing 80 is completely melted together. This feature may be provided by over-molding the elastic bumper 82 to the plastic housing 80, or co-molding the elastic bumper 82 and plastic housing 80. The elastic bumper 82 is approximately 1.5 mm to 2 mm in thickness in order to obtain the desired protection characteristics and satisfy the manufacturing requirements.

Referring now to Figure 11, an alternative embodiment battery pack 86 is provided with a plastic housing 88 and an elastic bumper 90 affixed thereto by an adhesive 92 dispensed therebetween. The adhesive 92 and elastic bumper 90 may be affixed to the plastic housing 88 in a progressive molding operation or by assembly of separate components. The elastic bumper 90 is formed with a thickness of approximately 1 mm, or thicker for protecting the battery pack 86.

Referring now to Figure 12, another alternative embodiment battery pack 94 is illustrated in accordance with the present invention. The battery pack 94 includes a plastic housing 96 and an elastic bumper 98. The elastic bumper 98 is affixed to the plastic housing 96 through frictional engagement therebetween. Thus, the elastic bumper 98 is formed separately from the plastic housing 96 and is pressed thereon in an assembly operation. Plastic housing 96 further includes a plurality of external ribs 100 formed thereabout for enhancing the frictional engagement within the elastic bumper 98. Additionally, the external ribs 100 may be barbed in a direction corresponding to the direction in which the elastic bumper 98 is pressed thereon to prevent removal of the elastic bumper 98 from the plastic housing 96. Alternatively, the ribs 100 may be provided about the plastic housing 96 and the elastic bumper may be molded thereto for mechanical interlocking engagement with the ribs 100. Elastic bumper 98 is approximately 1 mm or thicker.

Referring now to Figure 13, yet another alternative embodiment battery pack 102 is provided having a plastic housing 104 and an elastic bumper 106 affixed thereto. The elastic bumper 106 is formed from a liquid elastomeric material that is sprayed onto the plastic housing 104 to cure and form the elastic bumper 106. The material of the elastic bumper 106 is formed from either a regular soft touch paint or a foam type rubbery paint having a thickness of 0.3 mm or greater. The material of the elastic bumper 106 also includes an agent for causing a chemical reaction with the exterior of the elastic housing 104 creating a bond upon curing to secure the elastic bumper 106 to the plastic housing 104.

Referring now to Figure 14, a still further alternative embodiment battery pack 108 is illustrated in accordance with the present invention. Battery pack 108 includes a plastic housing 110 and an elastic bumper 112 affixed thereto. Elastic bumper 112 is formed from a liquid elastomeric material, preferably molten rubber, and the plastic housing 110 is dipped partially therein. The plastic housing 110 receives a layer of rubber material that either melts with or cures to an interface 114 with the plastic housing 110 thereby creating the elastic bumper 112.

Referring again to Figures 4 and 6 of the preferred embodiment battery pack 20, the battery pack 20 includes a plurality of vents 148 provided in the tapered guide-way 64 and aligned with an associated handle 28, 38 for assembly. Additionally, the underside of the battery pack 20 includes another series of vents 150. The vents 148 and 150 are provided for ventilation of the battery 20 as is well known in the art. Thus, as the battery 20 raises in temperature, air is permitted therethrough by convection, or is forced therethrough by a fan of the motor or an additional fan which may be provided within the handle 28, 38 of the specific power tool or within the associated charger. Therefore, it may not always be desired to cover the entire floor 46 of the associated battery pack 20. Ported or vented battery packs are disclosed in assignee's United States patent application, *Battery Venting System,* S.N. , which was filed on June 3, 2003 and is incorporated in its entirety by reference herein.

In summary, the present invention provides a simplified and relatively low cost apparatus for preserving battery pack life and power tool life by minimizing damage caused by inadvertent misuse of the tool.

While embodiments of the invention have been illustrated and described, it is not intended that these embodiments illustrate and describe all possible forms of the invention. Rather, the words used in the specification are words of description rather than limitation, and it is understood that various changes may be made without departing from the scope of the claims.

## Claims

1. A battery pack (20) for use with a portable electric power tool (22, 32) comprising:
a plastic housing (44) having a floor (46), a circumferential wall (48) extending upward from an outer peripheral edge of the floor (46) and a cap (50) cooperating with an upper outer peripheral region of the circumferential wall to define an enclosed internal cavity (52);
a relatively soft elastic bumper (58) mounted to the plastic housing (44) and extending only about the outer peripheral edge of the floor, and overlying adjacent portions of the floor (46) and circumferential wall (48); and
a plurality of battery cells (54) mounted within the enclosed internal cavity (52) of the plastic housing (44);
wherein the elastic bumper (58) serves to cushion an impact load exerted on the battery pack (20) and the associated power tool (22, 32) if the battery pack (20) or the electric power tool (22, 32) and battery pack (20) assembly is dropped in an orientation in which the battery pack (20) strikes a hard surface; **characterised by** an internal annular elastic member (56, 56') suspending the battery cells (54) within the enclosed internal cavity (52) of the plastic housing (44).

2. The battery pack of claim 1 wherein the elastic bumper (58) is over-molded onto the plastic housing (44).

3. The battery pack of claim 1 wherein the floor (46) and the circumferential wall (48) are formed from an injection molding process, and the elastic bumper (58) is co-molded therewith.

4. The battery pack of claim 1 wherein the elastic bumper (58) is mechanically interlocked with the plastic housing (44).

5. The battery pack of claim 1 wherein the plastic housing (44) includes at least one aperture (74) formed therethrough for receiving a projection (76) of the elastic bumper (58) for mechanically interlocking the elastic bumper (58) thereto.

6. The battery pack of claim 1 wherein the elastic bumper (98) is affixed to the plastic housing (88) by an adhesive (92) applied therebetween.

7. The battery pack of claim 1 wherein the elastic bumper (58) is secured to the plastic housing (44) by a frictional fit therebetween.

8. The battery pack of claim 1 wherein the plastic housing (96) includes a plurality of external ribs (100) for frictional engagement with the elastic bumper (98).

9. The battery pack of claim 1 wherein a liquid elastomeric material is sprayed onto the plastic housing (104) to form the elastic bumper (106).

10. The battery pack of claim 1 wherein the plastic housing (110) is dipped into a liquid elastomeric material to form the elastic bumper (112).

11. The battery pack of claim 1 wherein the elastic bumper (58) is separately formed and fastened to the outer peripheral edge of the plastic housing (44).

12. The battery pack of claim 1 wherein the elastic bumper (58) has a nominal wall thickness of 0.3 millimeters to four times a nominal wall thickness of the plastic housing (44).

13. The battery pack of claim 1 wherein the elastic bumper (58) has a nominal wall thickness of 0.75 millimeters to 2 millimeters.

14. The battery pack of claim 1 wherein the elastic bumper (58) has a durometer of 20 Shore O to 80 Shore A.

15. The battery pack of claim 1 wherein the elastic bumper (58) has a durometer of 20 Shore A to 75 Shore A.

16. The battery pack of claim 1 wherein the elastic bumper (58) has a static coefficient of friction of 0.5 or greater when cooperating with a smooth, dry planar glass reference surface.

17. The battery pack of claim 1 wherein the annular elastic member (56, 56') has a durometer of 20 Shore O to 80 Shore A and a nominal radial thickness of 0.3 millimeters to four times a nominal wall thickness of the plastic housing (44).

18. The battery pack of claim 1 wherein the plastic housing (44) is provided with at least one spring biased latch (60), which locks the battery pack (20) and the power tool (22, 32) in an assembled state.

19. The battery pack of claim 18 wherein the latch (60) projects from the housing (44) a predefined distance when the spring is compressed, and the at least a portion (62) of the elastic bumper (58) has a thickness that is greater than the predefined distance.

20. The battery pack of claim 1 wherein the cap (50) is provided with a tapered guide-way (64) for releasably receiving a cooperating mounting flange (66) on the power tool (22, 32) when a power tool (22, 32) is moved relative to the battery pack (20), along a longitudinal axis which is generally parallel to the floor (46) of the battery pack (20).

21. The battery pack of claim 20 wherein the tapered guide-way (64) tapers in both a transverse and vertical direction to accommodate a slight misalignment of the power tool (22, 32) and battery pack (20) during assembly.

22. The battery pack of claim 21 wherein the cap (50) of the battery pack (20) is provided with a spring biased latch (60), which locks the battery pack (20) and the power tool (22, 32) in an assembled state, wherein the spring biased latch (60) has a latch force during assembly which is less than the static frictional force exerted by the battery pack (20) when placed upon a smooth dry planar horizontal glass reference surface, thereby enabling a user to install the battery pack while placed on a horizontal surface onto the power tool using one hand.

23. The battery pack of claim 22 wherein the guide-way (64) tapers 1° to 25° transversely relative to a central longitudinal axis parallel to the floor (44).

24. The battery pack of claim 22 wherein the guide-way (64) tapers 1° to 25° vertically relative to a central longitudinal axis parallel to the floor (44).

## Patentansprüche

1. Batteriepackung (20) für die Verwendung mit einem tragbaren Elektrowerkzeug (22, 32), umfassend:
ein Kunststoffgehäuse (44), das einen Boden (46) aufweist, wobei sich eine Umfangswand (48) von einer Umfangskante des Bodens (46) nach oben erstreckt und eine Kappe (50) mit einem oberen äußeren Umfangsbereich der Umfangswand zusammenwirkt, so dass ein innerer eingeschlossener Hohlraum (52) definiert ist;
einen relativ weichen elastischen Stoßfänger (58), der an dem Kunststoffgehäuse (44) angebracht ist und nur um die äußere Umfangskante des Bodens hervorsteht, und über den benachbarten Abschnitten des Bodens (46) und der Umfangswand (48) liegt; und
eine Vielzahl von Batteriezellen, (54), die innerhalb des inneren eingeschlossenen Hohlraums (52) des Kunststoffgehäuses (44) angebracht sind;
wobei der elastische Stoßfänger (58) dazu dient, eine Stoßbelastung, die auf die Batteriepackung (20) und das mit dieser zusammenhängende Elektrowerkzeug (22, 32) ausgeübt wird, zu dämpfen, wenn die Batteriepackung (20) oder der Aufbau aus Elektrowerkzeug (22, 32) und Batteriepackung (20) in einer Ausrichtung, in der die Batteriepackung (20) eine harte Oberfläche trifft, fallen gelassen wird;
**dadurch gekennzeichnet, dass**
ein inneres ringförmiges elastisches Element (56, 56') die Batteriezellen (54) innerhalb des eingeschlossenen inneren Hohlraums (52) des Kunststoffgehäuses (44) sperrt.

2. Batteriepackung (20) nach Anspruch 1, bei der der elastische Stoßfänger (58) auf das Kunststoffgehäuse (44) aufgegossen ist.

3. Batteriepackung (20) nach Anspruch 1, bei der der Boden (46) und die Umfangswand (48) in einem Spritzgussverfahren ausgebildet sind, und der elastische Stoßfänger (58) damit mitgegossen ist.

4. Batteriepackung (20) nach Anspruch 1, bei der der elastische Stoßfänger (58) mit dem Kunststoffgehäuse (44) mechanisch ineinander greift.

5. Batteriepackung (20) nach Anspruch 1, bei der das Kunststoffgehäuse (44) zumindest eine Öffnung (74) umfasst, die durch dieses hindurch ausgebildet ist, zum Aufnehmen eines Vorsprungs (76) des elastischen Stoßfängers (58), so dass der elastische Stoßfänger (58) mechanisch mit diesem ineinander greift.

6. Batteriepackung (20) nach Anspruch 1, bei der der elastische Stoßfänger (98) an dem Kunststoffgehäuse (44) mittels eines Haftmittels (92) befestigt ist, das zwischen diesen aufgebracht ist.

7. Batteriepackung (20) nach Anspruch 1, bei der der elastische Stoßfänger (98) an dem Kunststoffgehäuse (44) durch eine Reibpassung zwischen diesen befestigt ist.

8. Batteriepackung (20) nach Anspruch 1, bei der das Kunststoffgehäuse (96) eine Vielzahl von äußeren Rippen (100) zum Reibeingriff mit dem elastischen Stoßfänger (98) umfasst.

9. Batteriepackung (20) nach Anspruch 1, bei der ein flüssiges Elastomermaterial auf das Kunststoffgehäuse (104) zum Ausbilden des elastischen Stoßfängers (106) aufgesprüht wird.

10. Batteriepackung (20) nach Anspruch 1, bei der das Kunststoffgehäuse (110) in ein flüssiges Elastomermaterial zum Ausbilden des elastischen Stoßfängers (112) eingetaucht wird.

11. Batteriepackung (20) nach Anspruch 1, bei der der elastische Stoßfänger (58) getrennt ausgebildet ist und an der äußeren Kante des Kunststoffgehäuses (44) befestigt wird.

12. Batteriepackung (20) nach Anspruch 1, bei der der elastische Stoßfänger (58) eine nominelle Wandstärke von 0,3 Millimeter bis zu dem vierfachen der nominellen Wandstärke des Kunststoffgehäuses (44) aufweist.

13. Batteriepackung (20) nach Anspruch 1, bei der der elastische Stoßfänger (58) eine nominelle Wandstärke von 0,75 Millimeter bis zu 2 Millimeter aufweist.

14. Batteriepackung (20) nach Anspruch 1, bei der der elastische Stoßfänger (58) einen Härtemesser von 20 Shore-Härte O bis zu 80 Shore-Härte A aufweist.

15. Batteriepackung (20) nach Anspruch 1, bei der der elastische Stoßfänger (58) einen Härtemesser von 20 Shore-Härte A bis zu 75 Shore-Härte A aufweist.

16. Batteriepackung (20) nach Anspruch 1, bei der der elastische Stoßfänger (58) einen statischen Reibungskoeffizienten von 0,5 oder größer aufweist, wenn er mit einer glatten, trockenen und ebenen Referenzglasfläche zusammenwirkt.

17. Batteriepackung (20) nach Anspruch 1, bei der das ringförmige elastische Element (56, 56') einen Härtemesser von 20 Shore-Härte O zu 80 Shore-Härte A und eine nominelle Wandstärke von 0,3 Millimeter bis zu dem vierfachen der nominellen Wandstärke des Kunststoffgehäuses (44) aufweist.

18. Batteriepackung (20) nach Anspruch 1, bei der das Kunststoffgehäuse (44) mit zumindest einer federbasierten Klinke (60) versehen ist, die die Batteriepackung (20) und das Elektrowerkzeug (22, 32) in einem zusammengebauten Zustand sperrt.

19. Batteriepackung (20) nach Anspruch 18, bei der die Klinke (60) von dem Gehäuse (44) um eine vordefinierte Entfernung hervorsteht wenn die Feder zusammengedrückt ist, und zumindest ein Abschnitt (62) des elastischen Stoßfängers (58) eine Dicke aufweist, die größer ist, als die vordefinierte Entfernung.

20. Batteriepackung (20) nach Anspruch 1, bei der die Kappe (50) mit einem sich verjüngenden Führungsweg (64) zum lösbaren empfangen eines kooperierenden Anbringflansches (66) an dem Elektrowerkzeug (22, 32) versehen ist, wenn ein Elektrowerkzeug (22, 32) relativ zu der Batteriepackung (20) entlang einer im Wesentlichen zum Boden (46) der Batteriepackung (20) parallelen Längsachse bewegt wird.

21. Batteriepackung (20) nach Anspruch 20, bei der der sich verjüngende Führungsweg (64) sowohl in eine querlaufende, als auch in eine vertikale Richtung verjüngt, so dass eine leichte Falschausrichtung des Elektrowerkzeugs (22, 32) und der Batteriepackung (20) während dem Zusammenbau angepasst wird.

22. Batteriepackung (20) nach Anspruch 21, bei der die Kappe (50) der Batteriepackung (20) mit einer federbasierten Klinke (60) versehen ist, die die Batteriepackung (20) und das Elektrowerkzeug (22, 32) in einem zusammengebauten Zustand sperrt, bei der die federbasierte Klinke (60) eine Klinkenkraft während des Zusammenbaus aufweist, die niedriger ist als die statische Reibkraft, die auf die Batteriepackung (20) ausgeübt wird, wenn diese auf einer glatten, trockenen, ebenen, horizontalen Glasreferenzfläche angeordnet ist, wobei es einem Benutzer ermöglicht ist, die Batteriepackung mittels Benutzung einer Hand anzubauen, während sie auf einer horizontalen Fläche angeordnet ist.

23. Batteriepackung (20) nach Anspruch 22, bei der der Führungsweg (64) relativ zu einer zentralen Längsachse parallel zum Boden (44) um 1° bis 25° schräg geneigt ist.

24. Batteriepackung (20) nach Anspruch 22, bei der der Führungsweg (64) relativ zu einer zentralen Längsachse parallel zum Boden (44) um 1° bis 25° vertikal geneigt ist.

## Revendications

1. Bloc de batteries (20) pour outil électroportatif (22, 32) comprenant :
un boîtier en plastique (44) comportant un fond (46), une paroi périphérique (48) s'étendant vers le haut depuis un bord périphérique extérieur du fond (46) et un chapeau (50) coopérant avec une région périphérique extérieure supérieure de la paroi périphérique pour définir une cavité interne fermée (52) ;
un patin élastique relativement mou (58) monté sur le boîtier en plastique (44) et s'étendant seulement autour du bord périphérique extérieur du fond, et recouvrant des parties adjacentes du fond (46) et de la paroi périphérique (48) ; et
une pluralité d'éléments de batterie (54) montés dans la cavité interne fermée (52) du boîtier en plastique (44) ;
dans lequel le patin élastique (58) sert à amortir une charge de choc exercée sur le bloc de batteries (20) et l'outil électroportatif associé (22, 32) si le bloc de batteries (20) ou l'ensemble outil électroportatif (22, 32) et bloc de batteries (20) est lâché dans une orientation dans laquelle le bloc de batteries (20) heurte une surface dure ;
**caractérisé par** un élément élastique annulaire interne (56, 56') qui suspend les éléments de batterie (54) à l'intérieur de la cavité interne fermée (52) du boîtier en plastique (44).

2. Bloc de batteries selon la revendication 1, dans lequel le patin élastique (58) est surmoulé sur le boîtier en plastique (44).

3. Bloc de batteries selon la revendication 1, dans lequel le fond (46) et la paroi périphérique (48) sont formés à partir d'un processus de moulage par injection, et le patin élastique (58) est moulé simultanément à ces derniers.

4. Bloc de batteries selon la revendication 1, dans lequel le patin élastique (58) est verrouillé mécaniquement sur le boîtier en plastique (44).

5. Bloc de batteries selon la revendication 1, dans lequel le boîtier en plastique (44) comprend au moins une ouverture (74) formée à travers celui-ci pour recevoir une saillie (76) du patin élastique (58) pour verrouiller mécaniquement le patin élastique (58) sur celui-ci.

6. Bloc de batteries selon la revendication 1, dans lequel le patin élastique (98) est fixé sur le boîtier en plastique (88) par un adhésif (92) appliqué entre eux.

7. Bloc de batteries selon la revendication 1, dans lequel le patin élastique (58) est solidaire du boîtier en plastique (44) grâce à un assemblage par frottement.

8. Bloc de batteries selon la revendication 1, dans lequel le boîtier en plastique (96) comprend une pluralité de nervures extérieures (100) pour créer un emboîtement par frottement avec le patin élastique (98).

9. Bloc de batteries selon la revendication 1, dans lequel on pulvérise un matériau élastomère liquide sur le boîtier en plastique (104) pour former le patin élastique (106).

10. Bloc de batteries selon la revendication 1, dans lequel on trempe le boîtier en plastique (110) dans un matériau élastomère liquide pour former le patin élastique (112).

11. Bloc de batteries selon la revendication 1, dans lequel le patin élastique (58) est formé séparément puis fixé au bord périphérique extérieur du boîtier en plastique (44).

12. Bloc de batteries selon la revendication 1, dans lequel le patin élastique (58) a une épaisseur de paroi nominale de 0,3 millimètres à quatre fois une épaisseur de paroi nominale du boîtier en plastique (44).

13. Bloc de batteries selon la revendication 1, dans lequel le patin élastique (58) a une épaisseur de paroi nominale de 0,75 millimètres à 2 millimètres.

14. Bloc de batteries selon la revendication 1, dans lequel le patin élastique (58) a une dureté de 20 Shore O à 80 Shore A.

15. Bloc de batteries selon la revendication 1, dans lequel le patin élastique (58) a une dureté de 20 Shore A à 75 Shore A.

16. Bloc de batteries selon la revendication 1, dans lequel le patin élastique (58) a un coefficient de frottement statique supérieur ou égal à 0,5 quand il coopère avec une surface de référence en verre plane, lisse et sèche.

17. Bloc de batteries selon la revendication 1, dans lequel l'élément élastique annulaire (56, 56') a une dureté de 20 Shore O à 80 Shore A et une épaisseur radiale nominale de 0,3 millimètres à quatre fois une épaisseur de paroi nominale du boîtier en plastique (44).

18. Bloc de batteries selon la revendication 1, dans lequel le boîtier en plastique (44) est pourvu d'au moins un verrou à ressort (60), qui verrouille le bloc de batteries (20) et l'outil électroportatif (22, 32) dans un état assemblé.

19. Bloc de batteries selon la revendication 18, dans lequel le verrou (60) fait saillie depuis le boîtier (44) à une distance prédéfinie lorsque le ressort est comprimé, et la partie (62) du patin élastique (58) a une épaisseur qui est supérieure à la distance prédéfinie.

20. Bloc de batteries selon la revendication 1, dans lequel le chapeau (50) est pourvu d'une voie de guidage à rétrécissement (64) destinée à recevoir de façon amovible une bride de montage coopérante (66) présente sur l'outil électroportatif (22, 32) quand on déplace un outil électroportatif (22, 32) par rapport au bloc de batteries (20), le long d'un axe longitudinal qui est globalement parallèle au fond (46) du bloc de batteries (20).

21. Bloc de batteries selon la revendication 20, dans lequel la voie de guidage à rétrécissement (64) se rétrécit à la fois dans une direction transversale et dans une direction verticale pour rattraper un léger défaut d'alignement de l'outil électroportatif (22, 32) et du bloc de batteries (20) au cours de l'assemblage.

22. Bloc de batteries selon la revendication 21, dans lequel le chapeau (50) du bloc de batteries (20) est pourvu d'un verrou à ressort (60), qui verrouille le bloc de batteries (20) et l'outil électroportatif (22, 32) dans un état assemblé, le verrou à ressort (60) ayant une force de verrouillage pendant l'assemblage qui est inférieure à la force de frottement statique exercée par le bloc de batteries (20) lorsque celui-ci est placé sur une surface de référence en verre horizontale, plane, lisse et sèche, ce qui permet à un utilisateur d'installer le bloc de batteries placé sur une surface horizontale sur l'outil électroportatif d'une seule main.

23. Bloc de batteries selon la revendication 22, dans lequel la voie de guidage (64) se rétrécit de 1° à 25° transversalement par rapport à un axe longitudinal central parallèle au fond (44).

24. Bloc de batteries selon la revendication 22, dans lequel la voie de guidage (64) se rétrécit de 1° à 25° verticalement par rapport à un axe longitudinal central parallèle au fond (44).
